# EUROPÄISCHE PATENTANMELDUNG

(11) **EP 0 733 866 A2**
(43) Veröffentlichungstag der Anmeldung: **25.09.1996**
(21) Anmeldenummer: 96104271.0
(22) Anmeldetag: 18.03.1996
(51) Int. Cl.: F24D 3/16

(54) **Heiz- und Kühldecke**

(30) Priorität: 21.03.1995 CH 792/95
(71) Anmelder: GIACOMINI Services and Engineering SA, CH-6512 Giubiasco (CH)
(72) Erfinder: Giacomini, Marco, 28016 Orta San Giulio (IT)
(74) Vertreter: Gaggini, Carlo, Dipl.-Ing.

(57) **Zusammenfassung**

Die vorliegende Erfindung betrifft eine Heiz- bzw. Kühldecke, deren Tragkonstruktion auf Trägerstangen (4) ein Rohr (6) trägt, das Windungen (7) bildet. Am Gebäude-Deckenmauerwerk sind auch Deckenplatten (9) befestigt. Auf den Rohren (6) werden mittels Wärmeleitung Wärme übertragende Elemente (12) angebracht, die aus Blechstreifen bestehen, die wie Klammer-Clips auf dem Rohr befestigt werden, und die das Rohr (6) gerade ausgerichtet halten und es daran hindern, auf dem Abschnitt zwischen zwei Trägerstangen (4) mit den Deckenplatten (9) in direkten Kontakt zu kommen. Die Blechstreifen (12) sind mit zwei Flügelchen (15, 15') versehen, über die sie sich auf der Metall-Deckenplatte (9) abstützen, auf die sie (im Fall der Heizung) die Wärme übertragen, oder welcher sie (im Fall der Kühlung) die Wärme entziehen. Die erfindungsgemässe Lösung ist gekennzeichnet durch einen hohen thermischen Wirkungsgrad und durch geringe Kosten dank der einfachen Konstruktion und Montage.

## Beschreibung

Die vorliegende Erfindung betrifft eine Heiz- und Kühldecke gemäss dem Oberbegriff des Patentanspruchs 1.

Decken dieser Art gelangen zur Klimatisierung von Wohnräumen immer häufiger zur Anwendung, insbesondere in Kombination mit Bodenbelägen, in die Heiz- und Kühlschlangen eingebaut sind. Solche Decken weisen gegenüber herkömmlichen Klimatisierungssystemen, die mit erzwungenen Zuluft- und Abluftströmungen der klimatisierter Luft durch eigens dafür vorgesehene Oeffnungen arbeiten, den grossen Vorteil auf, dass sie im Raum keine störenden Zugserscheinungen hervorrufen, die oft bei Personen Unwohlsein verursachen, die sich in den Räumen aufhalten.

Die Heiz-und Kühldecken gemäss der vorliegenden Erfindung haben die gemeinsame Eigenheit, dass sie dem Raum lediglich mittels reinem Wärmeleitungs- und Abstrahlungseffekt, d. h. ohne Luftströmungswirkung, im Fall der Beheizung Wärme zuzuführen bzw. im Fall der Kühlung entziehen. Zu diesem Zweck ist die Decke aus einem gut wärmeleitenden Material gefertigt, in der Regel aus einem Metall wie Aluminium oder Stahl in der Form von quadratischen Platten, oft Karos genannt, oder in der Form länglicher Lamellen, oft Riemen genannt, die aneinandergereiht werden, und sie wird mit einem Rohrleitungssystem in Kontakt gehalten, durch welches ein Heiz- oder Kühlmittel, normalerweise Wasser, zirkuliert. Soll die Decke als Raumheizung dienen, gibt das in den schlangenförmig verlegten Rohren zirkulierende Heisswasser einen Teil seiner Wärme durch Wärmeleitung an die Decke ab, die sie ihrerseits in die Raumluft abstrahlt. Soll die Decke hingegen als Kühldecke zur Raumkühlung dienen, lässt man kaltes Wasser durch die Rohre zirkulieren, das der Decke durch direkte Wärmeleitung Wärme entzieht. Die Luft, die sich an der Decke abkühlt und dabei schwerer wird als die warme Raumluft, sinkt in den unteren Bereich des Raumes ab, wodurch der ganze Raum gekühlt wird. Die Bewegungen der warmen Luft zur Decke hinauf und der gekühlten Luft nach unten erfolgen ohne jede äussere Luftumwälzungsmittel, wie beispielsweise Ventilatoren, sondern lediglich dank des Unterschieds im spezifischen Gewicht kalter und warmer Luft, was nur sehr beschränkte Luftströmungen hervorruft, die von den Personen im Raum nicht als störend oder schädlich empfunden werden.

Bei einer Decke der hier beschriebenen Art ist daher von grösster Wichtigkeit, dass eine wirksame Wärmeübertragung zwischen den Wärmetransportflüssigkeit führenden Rohren und der Abstrahlfläche der Decke sichergestellt wird. Aus diesem Grunde wurde schon auf verschiedene Arten versucht, diese Wärmeübertragung zu verbessern, und offensichtlich bestand gewählte Weg, vorzugsweise dieses Ziel zu erreichen, darin, zwischen den Röhren und den Deckenplatten einen direkten Wärmeübertragungs-Kontakt für die Wärmeleitung zu schaffen, da dieses System bekanntlich den wirksamsten Betrieb ermöglicht.

So zeigt beispielsweise die Europäische Patentanmeldung EP-A-0548480 eine Kühldecke, die wie die jene gemäss der vorliegenden Erfindung aus eine Tragkonstruktion aus horizontalen, untereinander parallel angeordneten Trägerstangen enthält, die im Mauerwerk der Decke verankert sind. Die parallelen Tragstangen tragen auf ihrer Unterseite zwei Arten von Einschnitten, deren eine zur Befestigung der Rohre der Kühlwasserschlange dient, welche aus einer Mehrzahl von aus mit Bögen verbundenen geradlinigen Abschnitten gebildeten Rohrwindungen besteht, und deren zweite Art zur Befestigung der Deckenplatten dient, die in diesem Fall die Form länglicher Riemen aufweisen. Gemäss der genannten Patentanmeldung sind die Einschnitte beider erwähnten Arten wechselseitig angebracht (d.h. die Einschnitte für die Rohrbefestigung sind auf der einen Seite der Tragstange angebracht, während die Einschnitte für die Befestigung der Deckenplatten auf der gegenüberliegenden Seite angebracht sind), in solcher Art, dass der innere, plattenförmige Oberflächenbereich der Deckenplatte mit der Unterseite des Kühlrohrs unter elastischer Vorspannung in Kontakt steht. Das heisst, das Rohr wird gemäss dem Prinzip der genannten Patentanmeldung direkt gegen die innere Oberfläche der Deckenplatte gepresst. Das Rohr wird also leicht gegen die Deckenplatte gequetscht, wobei dieses Anquetschen eine Verformung des Rohrs hervorruft und einen mechanischen Kraftschluss zwischen dem Rohr und den Deckenplatten sicherstellt, in solcher Weise, dass die Wärmeübertragung zwischen der Decke und der Rohrwandung mittels Wärmeleitung sichergestellt ist.

Diese Lösung weist jedoch zwei wesentliche Hauptnachteile auf, die die Anwendungsmöglichkeiten dieser Anordnung stark einschränken. Einerseits wird nur ein Linienkontakt längs der Berührungslinie zwischen Rohr und Deckenplatte erreicht, da trotz der leichten Deformation, die das Rohr gemäss der genannten Erfindung erfährt, kann das leichte Anquetschen des Rohrs die linienförmige Abstützfläche zwischen einem runden Rohr und einer ebenen Oberfläche nur minim verbreitern kann. Die Kontaktfläche zwischen Rohr und Deckenplatten-Innenwand bleibt also sehr klein, und daher bleibt auch die Wärmeleitung, sowohl bei Kühlung als auch bei Heizung (die in der erwähnten Anmeldung nicht betrachtet wurde),.sehr gering. Diese Decke weist daher nur beschränkte Wirksamkeit auf. Zudem macht der direkte Kontakt zwischen der Rohroberfläche und der Innenwand der Deckenplatten die Anwendung dieser Lösung sehr schwierig, um nicht zu sagen unmöglich, wenn die Decke aus quadratischen Platten oder Karos besteht, die allseitig mit einem verstärkenden, nach innen aufgebogenen Rand versehen sind. Solche Verstärkungsränder würden erfordern, dass sich das Rohr entweder von der Innenfläche der Platten abhebt, um die Ränder zweier benachbarter Platten zu überqueren - eine Lösung, die alles andere als einfach auszuführen ist - oder dass besondere Ausschnitte für den Durchgang der Rohre in den aufgebogenen Rändern vorgesehen werden, was jedoch die Platten so stark schwächen würde, so dass sie leicht wellig werden könnte, mit ästhetischen Folgen, die man sich leicht vorstellen kann.

Zur Verbesserung der Wärmeübertragung zwischen dem wasserführenden Rohr und den Deckenlatten schlägt die Patentanmeldung DE-A-4020970 vor, dass das Rohr von unten her in eine Nut eines Profilsystems eingeführt wird, worauf das Profilsystem an einem Aufhängungselement in einstellbarer Höhe verschiebbar befestigt wird, wonach das Aufhängeelement auf einer Tragschiene derart befestigt wird, dass das Profilsystem bis zum Anschlag der Kassette oder der Deckenplatte gehoben wird, wo es sich in solcher Weise abstützt, dass das Aufhängeelement entlastet wird.

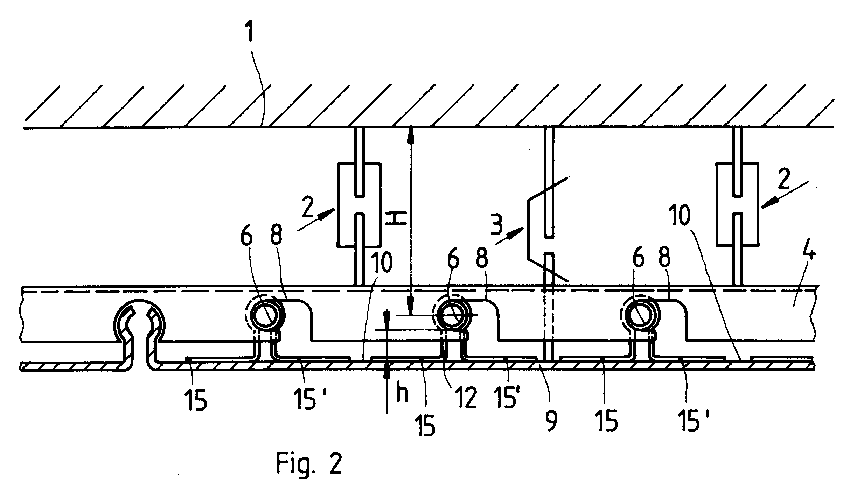

Diese Lösung ist gewiss interessant, soweit sie die in der Fig. 2 gezeigte Lösung betrifft, welche deren Anwendung mit dem System mit nur einem Rohr zeigt. Gemäss dieser Lösung wird von oben her ein kleines U-förmiges Blech mit zwei horizontalen Flügeln, je einer auf jeder Seite des U, über das Rohr eingeführt. Das Rohr wird somit längs eines Bogens von 180° vom Blech über eine Fläche umfasst, die der Hälfte der ganzen Rohroberfläche entspricht, also nicht mehr bloss längs einer Berührungslinie. Dies erlaubt eine wesentliche Steigerung der Wirksamkeit der Anlage bezüglich der Wärmeleitung. Diese Lösung, die übrigens den Stand der Technik darstellt, der der vorliegenden Erfindung am nächsten kommt, weist immer noch einige Nachteile auf, die die praktische Anwendung erschweren.

Ein erster Nachteil besteht darin, dass das Rohr in eine Nut eines Profilsystems eingeführt wird, mit einer festen Schiene, an der das Rohr aufgehängt wird, und sich längs einer Führung auf und ab bewegen kann. Dies bedeutet, dass das U-förmige Profil mit den horizontalen Flügeln integrierender Bestandteil des Rohrtragsystems ist, weil das Rohr eigentlich vom U-förmigen Nutenprofil getragen wird, mittels der Tragschiene (die deshalb immer parallel und über jedem geraden Rohrabschnitt vorhanden sein muss) bevor die Deckenplatten montiert werden. Sobald die Deckenplatten montiert sind, stützt sich das U-förmige auf die Deckenplatten selbst ab, so dass die Tragschienen keinerlei Tragfunktion mehr ausüben. Anders ausgedrückt erfordert dieses System die Verwendung vieler Profil-Leitschienen, die jedoch nur während der Montage der Decke gebraucht werden und nach Beendigung der Montage keinerlei Tragfunktion mehr haben; diese Lösung ist also unnötig aufwendig. Ein zweiter Nachteil dieser Anordnung ist darin zu sehen, dass das Rohr lediglich in eine von einem U-förmig gebogenen Blech gebildete Nut eingeführt wird, die das Rohr über einen Bogen von 180° in solcher Art umfasst, dass es nur längs einer Ebene geführt wird, während es sich parallel zur Nut frei bewegen kann und beispielsweise unter dem Gewicht des darin enthaltenen Wassers nach unten ausbauchen kann. Dann verläuft das Rohr jedoch nicht mehr geradlinig und kann von der ganzen Kontaktfläche auf der Innenseite des Bogens in der Nut abheben, wobei es nur noch längs zwei parallelen Berührungslinien mit der Nut in Kontakt bleibt. Dies kann die Wärmübertragungskapazität der Wärmeleitung dieser Anordnung sehr stark reduzieren.

Ziel der vorliegenden Erfindung ist daher, die genannten, im Stand der Technik angetroffenen Nachteile auszuschalten und insbesondere eine Heiz- und Kühldecke von grosser thermischer Wirksamkeit vorzuschlagen, die einen optimalen Wärmetausch zwischen der Decke und dem Heiz- bzw. Kühlrohr sicherstellt und bei beschränktem Kostenaufwand auch einfach zu montieren ist.

Dieses Ziel wird mit einer Heiz- und Kühldecke entsprechend dem Oberbegriff des Patentanspruchs 1 dank den im charakterisierenden Teil des Patentanspruchs 1 beschriebenen Eigenheiten erreicht.

Gemäss der vorliegenden Erfindung sind die die Wärme mittels Wärmeleitung übertragenden Metall-Elemente zwischen dem Rohr und der Innen-Oberfläche nicht wie im Stand der Technik dargestellt, Bestandteil eines Profil-Systems, das das Rohr trägt, sondern U-förmige Elemente mit zwei Flügelchen, die wie ein Klammer-Clip auf das Rohr aufgesteckt werden können. Einerseits vereinfacht und verbilligt dies das wärmeübertragende Element ganz wesentlich, und andererseits wird das genannte Element dadurch ganz unabhängig von der Tragkonstruktion der Decke, so dass es beispielsweise im letzten Moment montiert, d.h. von oben her auf dem Rohr angebracht werden kann, also nachdem bereits alle für das Leitungssystem erforderlichen Verbindungen angeschlossen sind, und unmittelbar bevor die Deckenplatten oder die Deckenriemen von unten her befestigt werden.

Auch ergibt sich, da sich der mittlere, gebogene Bereich des wärmeübertragenden Elementes um das Rohr über einen Zentriwinkel (α) von über 180° erstreckt, dass das Rohr im Innern des wärmeübertragenden Elementes allseitig geklemmt ist und sich daher absolut geradlinig ausrichten muss, ebenso geradlinig, wie die Nut im Element ausgebildet ist, so dass das Rohr einerseits mit mehr als der Hälfte seiner Oberfläche in Kontakt mit dem Element stehen muss, was einen optimalen Wärmeaustausch sicherstellt, und dass andererseits ein Durchhängen des Rohrs vermieden wird, das unvermeidlich dazu führen müsste , dass das Rohr nur noch längs einer Berührungslinie mit der Innenfläche der Platten in Kontakt stünde.

Die Patentansprüche 2 bis 8 betreffen weitere Verbesserungen der erfindungsgemässen Decke, deren Vorteile im folgenden im einzelnen erklärt werden, während der Patentanspruch 9 ein Verfahren für die Montage der erfindungsgemässen Decke betrifft, dessen besondere Vorzüge hauptsächlich darauf beruhen, dass die wärmeübertragenden Elemente in der Form von Metallblechen auf dem Rohr angebracht werden können, nachdem bereits alle Verbindungen der Flüssigkeitsleitungen in der ganzen Anlage erstellt sind.

Die vorliegende Erfindung wird im folgenden unter Bezugnahme auf verschiedene abgebildete Ausführungsformen im einzelnen beschrieben. Die Figuren zeigen:
- Fig. 1 eine Ausführungsform der erfindungsgemässen Decke in einer Seitenansicht der geradlinigen Rohrabschnitte;
- Fig. 2 die Decke gemäss Fig. 1 mit einer Blickrichtung senkrecht zu jener von Fig. 1;
- Fig. 3 einen Querschnitt eines wärmeübertragenden Elementes, das auf einem Rohr angebracht ist und sich auf eine Deckenplatte abstützt;
- Fig. 4 eine perspektivische Darstellung eines erfindungsgemässen wärmeübertragenden Elementes;
- Fig. 5 einen Grundriss einer erfindungsgemässen Decke in schematischer Darstellung mit verschiedenen Varianten der wärmeübertragenden Elemente;
- Fig. 6 Einen Schnitt längs der Linie A-A in Fig. 5;
- Fig. 7 eine vereinfachte perspektivische Darstellung eines Teils einer erfindungsgemässen Decke, der die Anwendung der Erfindung auf eine Decke mit quadratischen Deckenplatten zeigt, die mit Rändern versehen sind, wobei zur besseren Verständlichkeit der Darstellung alle Befestigungselemente für die Deckenplatten und für das Rohr weggelassen sind.

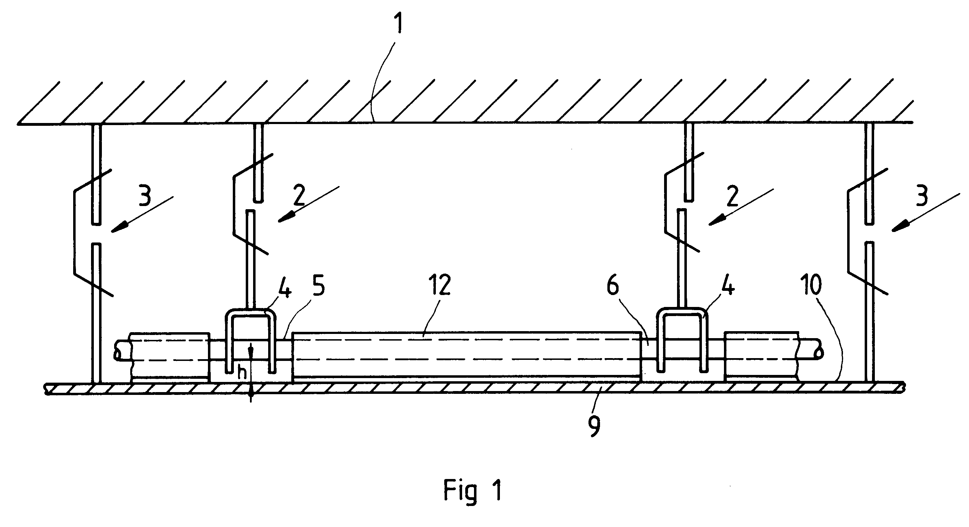

Die Figuren 1 und 2 verdeutlichen in vereinfachter Darstellung die erforderlichen Elemente, die eine erfindungsgemässe Decke bilden, wobei die beiden Figuren Ansichten zeigen, die im rechten Winkel zueinander stehen.

Mit der Bezugsziffer 1 ist das Mauerwerk der Gebäudedecke bezeichnet, in welchem mit an sich bekannten und für die vorliegende Erfindung belanglosen Mitteln alle Elemente verankert sind, die die Decke selbst bilden. In den Figuren 1 und 2 ist als Befestigungsmethode sowohl für die Heiz- bzw. Kühlrohre als auch für die Deckenplatten jene gewählt, die von zwei in einem Fixierungselement mit Einschnitt verschiebbaren Stangen gebildet wird, eine allgemein angewendete Befestigungsmethode, die trotz ihrer Einfachheit erlaubt, die Montagehöhe der einzelnen Elemente genau und stabil einzustellen. Es ist jedoch sogleich zu unterstreichen, dass eine Methode dieser Art (wie in der Figur 1 für die Befestigung der Rohre mit der Bezugsziffer 2 und für die Befestigung der Deckenelemente mit 3 bezeichnet) nicht die einzige Methode ist, die angewendet werden kann, und dass viele andere (beispielsweise Zugstangen mit Gewinde) verfügbar sind, die sich für diesen Zweck ebenso gut eignen würden. An den Zugstangen 2 sind horizontal und untereinander parallel angeordnete Trägerstangen 4 befestigt (was zweckmässigerweise mittels der Zugstangen 2 eingestellt wird). An diesen Trägerstangen 4 sind auf beliebige Arten, von welchen eine in den Figuren 1 und 2 bloss als Beispiel gezeigt ist, die geradlinige Abschnitte 5 der Schlangen eines flexiblen Rohrs 6 befestigt, das Heiz- bzw. Kühlflüssigkeit führt.

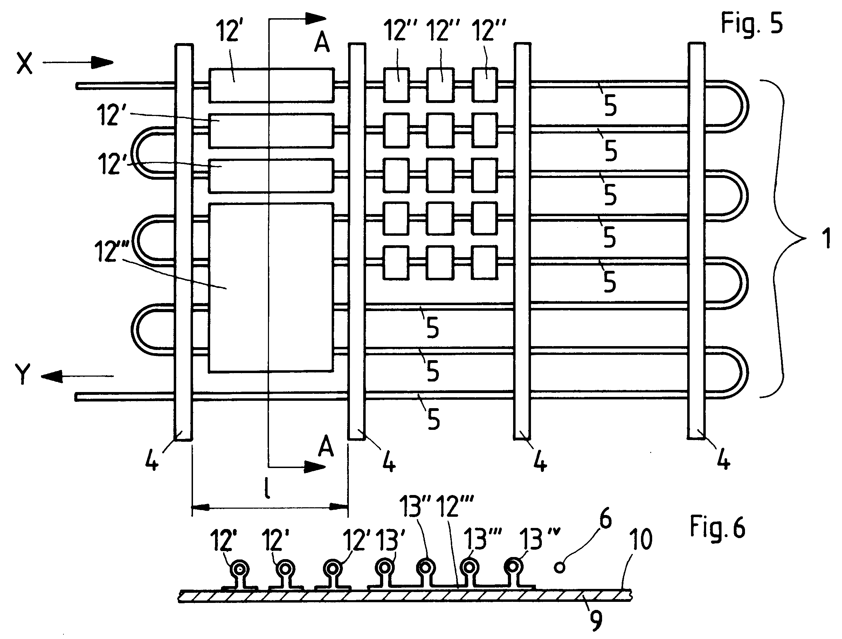

In der Figur 5, die im folgenden unter Bezugnahme auf verschiedene Ausführungsformen der vorliegenden Erfindung näher beschrieben wird, lassen sich die geradlinigen Abschnitte 5 der Windungen 7 eines flexiblen Rohrs 6 besser als in den Figuren 1 und 2 unterscheiden. Die Figur 5 zeigt die erfindungsgemässe Decke im Grundriss, und es ist ersichtlich, dass das von Heiz- bzw. Kühlmittel (normalerweise Wasser) durchflossene Rohr als eine aus einer beliebigen Anzahl von Bögen bestehende Schlange in einer Ebene verlegt wird. Eine solche Schlange besitzt einen Einlass x und einen Ausgang y (Fig. 5), die mit der Speiseleitung bzw. mit der Rückführleitung der Flüssigkeit und mit geeigneten Reglerelementen (Ventile, Thermostaten, usw.), die bei jeder Heiz- bzw. Kühlanlage erforderlich sind, und die hier nicht näher beschrieben sind, da sie zum bekannten Stand der Technik gehören.

Als wesentlich ist hierbei lediglich festzuhalten, dass das Heiz- bzw. Kühlrohr ein durchgehendes flexibles, normalerweise aus Kunststoff bestehendes Rohr ist, das an der Decke angebracht und mittels Tragstangen 4 befestigt wird, ohne Fugen, die Wasserverluste und Leckage verursachen könnten. Selbstverständlich können in einer solchen Decke mehr als eine Schlange verlegt werden, wie es die Heiz- bzw. Kühlleistung oder die Grössendimension der Decke efordern. Dies ändert jedoch nichts am Grundprinzip der vorliegenden Erfindung.

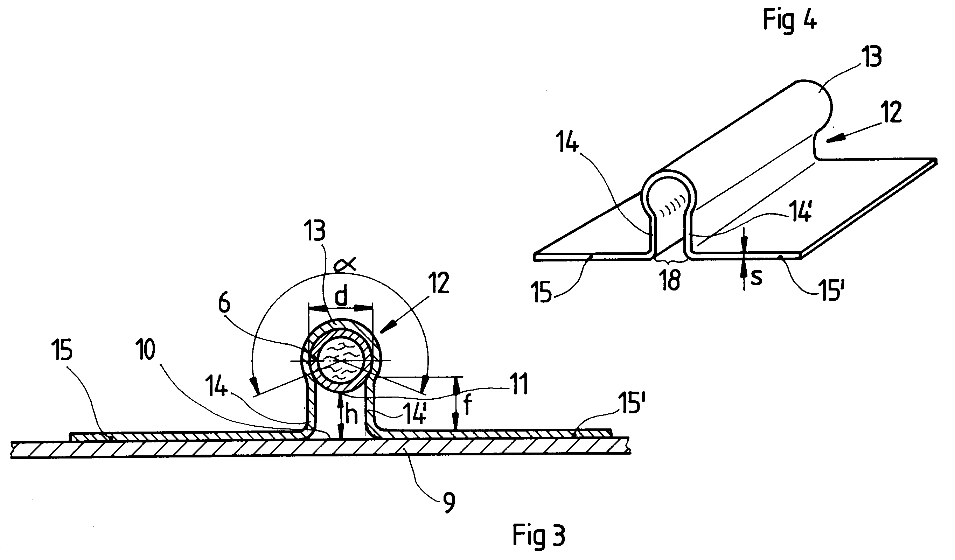

Das in den Figuren 1 und 2 als Beispiel gezeigte Befestigungssystem für die geradlinigen Abschnitte 5 des Rohrs 6 an sich ist aus der Anwendungspraxis bekannt und ist beispielsweise auch in der eingangs erwähnten Patentanmeldung EP-A-0548480 gezeigt, mit dem Grundprinzip, dass die mit U-Profil versehenen Trägerstangen 4 (vgl. Fig. 1) zwischen ihren beiden nach unten gerichteten Flügeln eine Oeffnung 8 bilden, in welche das Rohr 6 eingelegt wird. Im gezeigten Fall ist die Oeffnung asymmetrisch, jedoch mit einem Durchgangsbereich für das Rohr und mit einem Befestigungsbereich, der in Fig. 2 links vom Durchgangsbereich gezeigt ist, und der in der Weise ausgebildet ist, dass er das Rohr von unten her hält ohne es zu verformen. Dies stellt jedoch lediglich eine der verschiedenen im Rahmen der vorliegenden Erfindung möglichen und anwendbaren Lösungen einer Oeffnung zur Befestigung des Rohrs 6 dar. Eine weitere mögliche Lösung ist beispielsweise in Fig. 4 der Anmeldung EP-A-0548480 dargestellt, die eine symmetrische Oeffnung zeigt, die das Rohr hält, da sie es längs eines Bogens von mehr als 180° umfasst. Für die vorliegende Erfindung ist lediglich von Bedeutung, dass das Rohr 6 vom der Trägerstange 4 in einer absolut bestimmten Höhenposition gehalten wird, nämlich bezüglich seines Abstandes H (vgl. Fig. 2) vom Gebäude-Deckenmauerwerk 1.

Die erfindungsgemäse Decke weist deckende Platten 9 aus Metall auf, die ihrerseits im Mauerwerk 1 der Gebäudedecke verankert sind. Solche Platten 9 können sowohl als ebene Platten ohne aufgebogene Ränder ausgebildet sein als auch als quadratische Platten mit aufgebogenen Rändern an allen vier Seiten, auch Karos genannt, oder als langezogene rechteckige Platten, auch Riemen genannt, die häufig mit einem versteifenden aufgebogenen Rand auf beiden Längsseiten versehen sind. Die Form der Platten 9 hat keinen Einfluss auf die Anwendung der Erfindung, was gegenüber dem Stand der Technik einen ganz besonderen Vorteil bietet dank der Möglichkeit, quadratische Platten auf allen vier Seiten mit aufgebogenen Rändern zu versehen, wie im folgenden noch zu erläutern ist. Normalerweise sind die Deckenplatten 9 aus einem gut wärmeleitenden leichten Metall gefertigt, wie beispielsweise Aluminium, und weisen eine Reihe von Oeffnungen auf, die einen gewisse Wärmeaustausch zwischen dem Raum und dem Zwischenraum zwischen den Platten 9 und dem Mauerwerk der Gebäudedecke 1 erleichtert. Aber auch diese Eigenschaften sind im Rahmen der vorliegenden Erfindung nur von untergeordneter Bedeutung. Hingegen ist gemäss der Erfindung erforderlich, dass die geradlinigen Abschnitte 5 des Rohrs 6 an den Trägerstangen 4 auf einem Abstand H vom Mauerwerk 1 der Gebäudedecke in solcher Weise befestigt sein sollen, dass zwischen der Innenfläche 10 der Deckenplatten 9 (vgl. Figuren 1, 2, 3 und 6) und dem tiefsten Punkt 11 (Fig. 3) des Rohrs 6 ein Abstand (h) (Figuren 1, 2 und 3) eingehalten bleibt, so dass jede Berührung zwischen den geradlinigen Abschnitten 5 des Rohrs 6 und der Innenfläche 10 der Deckenplatten 9 ausgeschlossen ist. Ferner weist die erfindungsgemässe Decke mittels Wärmeleitung zwischen dem Rohr 6 und der Innenfläche 10 der Deckenplatten 9 Wärme übertragende Elemente 12 aus Metall auf, die an sich aus der Fig. 2 der Patentanmeldung DE-A-4020970 bekannt sind. Die vorliegende Erfindung hebt sich vom bekannten Stand der Technik ab dank der besonderen Ausbildung dieser wärmeübertragenden Metall-Elemente 12, die aus Metallblechstreifen bestehen und sich dadurch auszeichnen, dass sie versehen sind mit:
- einem mittleren, zu einem Bogen 13 gebogenen Bereich (Figuren 3 und 4), dessen Innendurchmesser d im wesentlichen dem Aussendurchmesser des Rohrs 6 entspricht, und der das Rohr 6 über einen Zentriwinkel (α) von mehr als 180° umfasst,
- zwei geradlinigen Bereichen 14 und 14' die den gebogenen Bereich 13 des Blechstreifens auf beiden Seiten fortsetzen in
- zwei Flügelchen 15 und 15', die sich in einer Ebene je auf eine Seite der Bogenzone 13 erstrecken, und die sich nach der Montage auf der Innenfläche 10 der entsprechenden Deckenplatte 9 abstützen.

Dank dieser Ausbildungsform der mittels Wärmeleitung Wärme übertragenden Elemente 12, die aus einfachen Blechstreifen gefertigt sind, und die während der Montagephase keinerlei Tragfunktion für das Rohr 6 ausüben (was hingegen in der aus der früheren Patentanmeldung DE-A-4020970 bekannten Lösung der Fall war), lassen sich die bereits eingangs erwähnten besonderen Vorteile der vorliegenden Erfindung erreichen, nämlich:
- Grösste Einfachheit und geringe Kosten der Lösung, da sich die Aluminium-Blechstreifen durch einfaches Abschneiden und Biegen aus einer Tafel herstellen lassen, ohne dass irgendeine kostspielige Druckgussform erforderlich ist,
- Eine allseitige Führungswirkung auf das Rohr, da es zu geradlinigem Verlauf gezwungen ist und daher mit der ganzen Innenfläche des Bogenbereichs 13 des Blechstreifens im Kontakt steht, die sich erfindungsgemäss über einen Bogen von mehr als 180° erstreckt, in einer besonders vorteilhaften Ausführungsform der Erfindung gemäss dem Patentanspruch 3 sogar über mehr als 200°. Dies stellt im Vergleich zu den bekannten Lösungen eine Wärmeübertragung durch Wärmeleitung auf der ganzen Länge des Blechstreifens , d.h. des mit Wärmeleitung Wärme übertragenden Elementes sicher, so dass die Heiz- bzw. Kühldecke höchsten Wirkungsgrad erreicht.

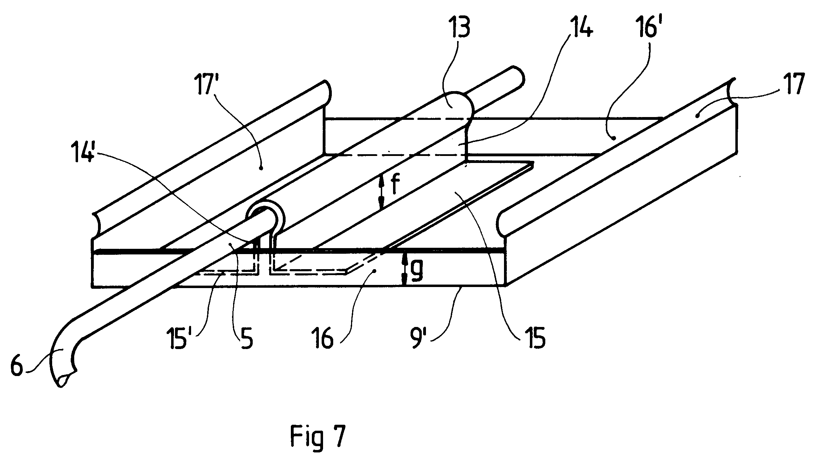

Gemäss einer in den Figuren 5 und 6 dargestellten ersten vorgezogenen Ausführungsform der Erfindung ist die Längenausdehnung der Metallstreifen, die die wärmeübertragenden Elemente 12 bilden, kleiner als die Distanz zwischen zwei benachbarten Trägerstangen 4. Die Blechstreifen werden an den geradlinigen Abschnitten 5 des Rohrs 6 zwischen zwei Trägerstangen 4 befestigt.

Aus der Fig. 5 ist insbesondere ersichtlich, dass sich die im oberen Teil links auf den ersten drei geradlinigen Rohrabschnitten 5 angebrachten wärmeübertragenden Elemente 12' über den Zwischenraum zwischen zwei benachbarten Trägerstangen erstrecken, den sie praktisch ganz ausfüllen. Im mittleren Teil der Darstellung hingegen ist ersichtlich, dass auf den geradlinigen Abschnitten 5 des Rohrs 6 dass zwischen zwei Trägerstangen 4 eine Mehrzahl benachbarter, jedoch voneinander getrennter Blechstreifen 12'' (gemäss dem Beispiel 3) eingesetzt sind. Diese Blechstreifen 12'' unterscheiden sich von den vorher gezeigten Streifen 12' nur in ihrer Längenausdehnung, während die Querschnitte absolut gleich sind. Auch mittels einer Vielzahl solcher Blechstreifen 12'' kann die erfindungsgemässe Forderung der Ausrichtung der geradlinigen Abschnitte 5 des Rohrs 6 ohne weiteres erfüllt werden, eine wichtige Voraussetzung für die vorliegende Erfindung. Diese Variante der Ausführungsform soll lediglich zeigen, dass die Längenausdehnung der mittels Wärmeleitung Wärme übertragenden Elemente 12, d.h. der Blechstreifen, im Rahmen der vorliegenden Erfindung durchaus innerhalb weiter Grenzen variieren kann. Zu bemerken ist sodann, dass gemäss einer weiteren Ausführungsform der Erfindung, die Gegenstand des Patentanspruchs 8 ist, und die in den Figuren 5 und 6, insbesondere im linken unteren Teil der Fig. 5, dargestellt ist, die Blechstreifen 12''' auf zwei oder mehr parallel verlaufenden Rohren 6 zusammengefasst sind und einen durchgehenden Streifen bilden, der mit mehreren benachbarten und untereinander parallelen mittleren Bereichen 13', 13'', 13''', 13'^{v} versehen ist. Diese Lösung gestattet eine Vereinfachung und Verbilligung der Herstellung der Blechstreifen, die die wärmeübertragenden Elemente bilden, und ist daher vor allem bezüglich der Wirtschaftlichkeit von Interesse.

Eine vorzugsweise gewählte Ausführungsform der erfindungsgemässen Decke sieht sodann vor, dass die beiden geraden Bereiche 14 und 14' der Blechstreifen, die den gebogenen Bereich 13 mit den zwei zu beiden Seiten in einer Ebene liegenden Flügelchen 15 und 15 'verbinden, eine Länge f aufweisen, die gleich oder grösser ist als der halbe Aussendurchmesser des Rohrs 6. Der Aussendurchmesser des Rohrs entspricht praktisch dem Bogendurchmesser d des gebogenen mittleren Bereichs 13 des vorher beschriebenen Blechstreifens, da engstmöglicher Kontakt mit dem Blechstreifen anzustreben ist.. Daher kann gesagt werden, dass der Aussendurchmesser des Rohrs 6 gleich d ist.

Die Ausführungsform gemäss der gezeigten Variante entspricht dem Patentanspruch 4, wonach das mittels Wärmeleitung Wärme übertragende Element 12 in Funktion des Durchmessers des Rohrs 6 zu dimensionieren ist. Wenn also das Rohr 6 einen Aussendurchmesser von 14 mm aufweist, wie er in der Praxis häufig gewählt wird, wird die Länge der beiden geraden Bereiche 14 und 14' mindestens 7 mm betragen. Dies erlaubt es, das nötige Mass der Steifigkeit des Blechstreifens zu erhalten und die verlangte Distanz h des tiefsten Punktes des Rohrs 6 von der Innenfläche 10 der Deckenplatte 9 einzuhalten.

Gemäss einer weiteren vorzugsweise gewählten Ausführungsform der Erfindung bestehen die Metallblechstreifen, die die wärmeübertragenden Elemente 12 bilden, wie bereits betont aus Aluminium, und weisen eine Dicke s auf (vgl. Fig. 4, die einen ähnlichen Blechstreifen in perspektivischer Darstellung zeigt), die zwischen 0.3 und 1 mm liegt. Mit dieser Vorgabe erreicht man vor allem optimale Blechbearbeitungsbedingungen und Materialkosten.

Eine besonders interessante Ausführungsform der Erfindung ist in Fig. 7 dargestellt und ist Gegenstand des Patentanspruchs 6, gemäss welchem die Metall-Deckenplatten 9 quadratische Platten 9' sind, die auf allen vier Seiten mit aufgebogenen Verstärkungsrändern 16, 16' und 17, 17' versehen sind. die höheren Verstärkungsränder dienen dazu, die Platten 9' an einer geeigneten Tragstruktur (nicht gezeigt) aufzuhängen, während die beiden niedrigeren Vertärkungsränder 16 und 16' keine andere Funktion haben, als die Platte 9' in perfekt gerader Form zu halten. Gemäss der Erfindung ist daher vorgesehen, dass die beiden geraden Bereiche 14 und 14' der Blechstreifen, die den gebogenen Bereich 13 auf beiden Seiten mit den in einer Ebene liegenden Flügelchen 15 und 15' verbinden, eine Länge f aufweisen, die grösser ist als die Höhe g der aufgebogenen Ränder 16 und 16' der quadratischen Deckenplatte 9' auf den im rechten Winkel zu den geradlinigen Abschnitten 5 des Rohrs 6 verlaufenden Seiten. Dank dieser Lösung können auch quadratische Platten, die auf allen vier Seiten mit aufgebogenen Rändern versehen sind, verwendet werden, ohne dass das Rohr 6 der Heiz- bzw. Kühlanlage mit den Deckenplatten 9' zusammenstösst, d.h. ohne dass die Rohre 6 entsprechend den aufgebogenen Rändern 16 und 16' zweier benachbarter quadratischer Deckenplatten nach oben aufgebogen werden müssen, wie dies in der Anordnung gemäss der Fig. 3 der Patentanmeldung DE-A-4020970 der Fall war, die den der vorliegenden Erfindung am nächsten kommenden Stand der Technik repräsentiert.

Dies bringt einen Vorteil von wesentlicher praktischer Bedeutung, wenn als Deckplatten auch Karos verwendet werden, die auf allen vier Seiten verstärkt sind und daher aufgebogene Ränder aufweisen. Eine weitere vorzugsweise gewählte Ausführungsform der vorliegenden Erfindung sieht vor, dass die Blechstreifen, die die Wärme mittels Wärmeleitung übertragenden Elemente 12 bilden, von oben her unter Verformung des Blechstreifens über das Rohr 6 eingebracht werden, wobei sich die Oeffnung 18 (Fig. 4) des Blechstreifens leicht öffnet und/oder das Rohr 6 leicht gequetscht wird.

Mit anderen Worten gesagt, um das Rohr 6 in die "Nut" einzuführen, die durch die beiden geraden Bereiche 14 und 14' und durch den gebogenen Bereich 13 des Blechstreifens gebildet werden, kann sowohl eine Verformung des Blechstreifens erfolgen, die eine Verbreiterung der Eingangsöffnung 18 hervorruft, oder unter lokaler Verformung kann das Rohr 6 hineingehen, das etwas zusammengedrückt wird, so dass es durch die Oeffnung 18 passieren kann, die enger ist als der Aussendurchmesser d des Rohrs, oder auch unter leichter Verformung beider Teile (Oeffnung 18 und Rohr 6). Letztes ist der üblichste Fall, entsprechend dem Mass an Elastizität sowohl des Blechstreifens als auch des Rohrs.

Der Patentanspruch 9 schliesslich betrifft ein Verfahren zur Montage der erfindungsgemässen Heiz- bzw. Kühldecke, das sich durch eine Reihenfolge von Operationen auszeichnet, die dank der Ausbildung der mittels Wärmeleitung Wärme übertragenden Elemente 12, die in der Praxis wegen ihrer Form auch "Kübelchen" genannt werden, möglich wird, die - im Gegensatz zu den Verhältnissen in der bekannten Lösung entsprechend dem Stand der Technik gemäss der Patentanmeldung DE-A-4020970 - auch erst nach der vollständigen Inbetriebnahme und dem endgültigen Hydraulik-Anschluss auf den Rohren 6 angebracht werden können. Dies erlaubt eine starke Vereinfachung und Rationalisierung der Montage und des Anschliessens im Vergleich mit den bisher bekannten Lösungen.

### LISTE DER IN DEN FIGUREN DARGESTELLTEN ELEMENTE

- 1: Gebäude-Deckenmauerwerk
- 2: Aufhänge-Stange
- 3: Aufhänge-Stange
- 4: Trägerstange
- 5: Geradliniger Abschnitt
- 6: Flexibles Rohr
- 7: Windungen
- 8: Oeffnung
- 9, 9': Dekenplatten
- 10: Innenfläche der Deckenplatten
- 11: Unterster Punkt des Rohrs
- 12: Wärmeübertragende Metall-Elemente
- 13: Gebogener mittlerer Bereich
- 14, 14': Gerade Zonen
- 15, 15': Flügelchen, die sich in einer Ebene erstrecken
- 16, 16': Aufgebogener Rand
- 17, 17': Aufgebogener Rand
- 18: Eintritts-Oeffnung

## Patentansprüche

1. Heiz- bzw. Kühldecke, deren Tragstruktur horizontal und parallel angeordnete Trägerstangen (4) umfasst, die im Gebäude-Deckenmauerwerk (1) verankert sind und an denen die geradlinigen Abschnitte (5), die im rechten Winkel zu den Trägerstangen (4) verlaufen, und Bögen eines flexiblen, vom Heiz- bzw. Kühlmittel durchflossenen Rohrs (6) befestigt sind, sowie Deckenplatten (9) aus Metall die ebenfalls im Gebäude-Deckenmauerwerk (1) verankert sind, wobei die geradlinigen Abschnitte (5) des Rohrs (6) unter einem Abstand (H) vom Gebäude-Deckenmauerwerk (1) an den Trägerstangen (4) befestigt sind, so dass zwischen der Innenfläche (10) der Deckenplatten (9) und dem untersten Punkt (11) des Rohrs (6) ein Abstand (h) eingehalten wird, so dass jede direkte Berührung zwischen den geradlinigen Abschnitten (5) des Rohrs (6) und der Innenfläche (10) der Deckenplatten (9) vermieden wird, sowie Metallelemente (12), die mittels Wärmeleitung zwischen dem Rohr (6) und der Innenfläche (10) der Deckenplatten (9) Wärme übertragen,
dadurch gekennzeichnet, dass
die wärmeübertragenden Elemente (12) aus Metall-Blechstreifen mit folgenden Bereichen bestehen:
- einem gebogenen mittleren Bereich (13) mit einem Bogendurchmesser (d), der im wesentlichen dem Aussendurchmesser des Rohrs (6) entspricht, und der sich über einen Zentriwinkel (α) von mehr als 180° um das Rohr (6) erstreckt und andrückt,
- zwei geraden Bereichen (14, 14') die den gebogenen Bereich (13) des Blechstreifens verbinden mit
- zwei Flügelchen, die sich je auf eine Seite des gebogenen Bereichs (13) in einer Ebene erstrecken, und die sich auf der Innenfläche (10) der entsprechenden Deckenplatte (9) abstützen.

2. Heiz- bzw. Kühldecke gemäss dem Patentanspruch 1,
dadurch gekennzeichnet, dass
die Metall-Blechstreifen, aus denen die wärmeübertragenden Elemente (12) bestehen, eine Längenausdehnung aufweisen, die kleiner ist als die Distanz (l) zwischen zwei benachbarten parallelen Trägerstangen (4), und dass sie auf den geradlinigen Abschnitten (5) des Rohrs (6) zwischen zwei Trägerstangen (4) befestigt werden.

3. Heiz- bzw. Kühldecke gemäss dem Patentanspruch 1,
dadurch gekennzeichnet, dass
sich der gebogene Bereich (13) der Blechstreifen um das Rohr (6) über einen Zentriwinkel (α) erstreckt, der grösser ist als 200°.

4. Heiz- bzw. Kühldecke gemäss dem Patentanspruch 1,
dadurch gekennzeichnet, dass
die beiden geraden Bereiche (14,14') der Blechstreifen, die den gebogenen Bereich (13) auf beiden Seiten mit den beiden sich in einer Ebene erstreckenden Flügelchen (15,15') verbinden, eine Länge (f) aufweisen, die gleich oder grösser ist als die Hälfte des Aussendurchmessers (d) des Rohrs (6).

5. Heiz- bzw. Kühldecke gemäss dem Patentanspruch 1,
dadurch gekennzeichnet, dass
die Metall-Blechstreifen (12) aus Aluminium bestehen und eine Dicke (s) zwischen 0.3 und 1 mm aufweisen.

6. Heiz- bzw. Kühldecke gemäss dem Patentanspruch 1, deren Metall-Deckenplatten (9') quadratisch sind und auf allen vier Seiten mit aufgebogenen Verstärkungsrändern (16, 16', 17, 17') versehen sind,
dadurch gekennzeichnet, dass
die beiden geraden Bereiche (14, 14') der Blechstreifen , die den gebogenen Bereich (13) auf beiden Seiten mit den beiden sich in einer Ebene erstreckenden Flügelchen (15,15') verbinden, eine Länge (f) aufweisen, die gleich oder grösser ist als die Höhe (g) der Verstärkungsränder (16, 16') der quadratischen Deckenplatte (9') an deren Seiten, die im rechten Winkel zu den geradlinigen Abschnitten (5) des Rohrs (6) stehen.

7. Heiz- bzw. Kühldecke gemäss dem Patentanspruch 1,
dadurch gekennzeichnet, dass
die Metall-Blechstreifen, aus denen die wärmeübertragenden Elemente (12) bestehen, von oben her über das Rohr (6) eingebracht werden, unter Verformung des Blechstreifens, dessen Oeffnung (18) sich leicht aufweitet, und/oder des Rohrs (6), das leicht gequetscht wird.

8. Heiz- bzw. Kühldecke gemäss dem Patentanspruch 1,
dadurch gekennzeichnet, dass
die Blechstreifen (12''') über zwei oder mehr parallelen Rohren (6) zusammen einen einzigen durchgehenden Blechstreifen bilden, der mit einer Mehrzahl von unter sich parallelen gebogenen Bereichen (13' bis 13'^{v}) versehen ist.

9. Verfahren zur Montage der Heiz- bzw. Kühldecke gemäss den Patentansprüchen 1 bis 8,
dadurch gekennzeichnet, dass
die Montage in folgender Reihenfolge abläuft:
- Zuerst werden am Gebäude-Deckenmauerwerk (1) auf einer vorgegebenen Höhe und mittels geeigneter Stangen (3) die unter sich parallelen Trägerstangen (4) befestigt,
- sodann werden an den Trägerstangen (4) die geradlinigen Abschnitte (5) des Windungen (7) des Rohrs (6) befestigt und alle erforderlichen Rohranschlüsse erstellt, worauf die hydraulische Funktion der ganzen Anlage ausgetestet wird,
- danach werden die Metall-Blechstreifen (12) zwischen den Trägerstangen von oben her über die geradlinigen Abschnitte (5) der Rohre (6) eingeführt, durch welche Operation die geradlinigen Abschnitte (5) der Rohre (6) dank dem von den Blechstreifen (12) auf sie ausgeübten Führungseffekt absolut gerade ausgerichtet werden, und
- zuletzt werden die Deckenplatten (9, 9') von unten her mittels ihrer Verankerungsmittel auf einer Höhe befestigt, die den Kontakt zwischen der Innenfläche (10) der Deckenplatten (9) und den Flügelchen (15, 15') aller Blechstreifen (12) sicherstellt.
